# EUROPÄISCHE PATENTSCHRIFT

(11) **EP 3 735 878 B1**
(45) Veröffentlichungstag und Bekanntmachung des Hinweises auf die Patenterteilung: **22.02.2023**
(21) Anmeldenummer: 20172301.2
(22) Anmeldetag: 30.04.2020
(51) Int. Cl.: A47J 27/00, A47J 36/32

(54) **GARSYSTEM**
COOKING SYSTEM
SYSTÈME DE CUISSON

(30) Priorität: 09.05.2019 EP 19382357
(43) Veröffentlichungstag der Anmeldung: 11.11.2020
(73) Patentinhaber: BSH Hausgeräte GmbH, 81739 München (DE)
(72) Erfinder: Cabeza Gozalo, Tomas, 50010 Zaragoza (ES); Lasobras Bernad, Javier, 50016 Ejea de los Caballeros (Zaragoza) (ES); Llorente Gil, Sergio, 50009 Zaragoza (ES); Rivera Peman, Julio, 50410 Cuarte de Huerva (Zaragoza) (ES)

(56) Entgegenhaltungen:
- WO-A1-2010/080738
- US-A1- 2005 285 735
- US-A1- 2015 208 845
- US-A1- 2017 238 749

## Beschreibung

Die Erfindung betrifft ein Garsystem nach dem Oberbegriff des Anspruchs 1 und ein Verfahren zu einer Herstellung eines Garsystems nach dem Oberbegriff des Anspruchs 12.

Aus der europäischen Patentanmeldung EP 1 591 049 A1 ist bereits ein Garsystem bekannt mit einem Gargeschirr, welches einen Lebensmittelaufnahmeraum teilweise definiert. Eine Sensoreinheit ist in einem Betriebszustand außerhalb des Lebensmittelaufnahmeraums angeordnet. In dem Betriebszustand ist die Sensoreinheit, insbesondere ein Detektor der Sensoreinheit, in einen Gargeschirrboden des Gargeschirrs eingebettet und/oder integriert.

Des Weiteren ist aus der US 2017/238749 A1 bereits ein Garsystem bekannt, welches zumindest ein Gargeschirr, das zumindest einen Lebensmittelaufnahmeraum wenigstens teilweise definiert, und welches zumindest eine Sensoreinheit umfasst, die zu einer Detektion zumindest einer Garkenngröße vorgesehen ist, wobei die Sensoreinheit in wenigstens einem Betriebszustand wenigstens teilweise auf einer dem Lebensmittelaufnahmeraum abgewandten Seite eines Gargeschirrbodens des Gargeschirrs an dem Gargeschirr befestigt ist.

Die Aufgabe der Erfindung besteht insbesondere darin, ein gattungsgemäßes System vorteilhaft weiterzuentwickeln. Die Aufgabe wird erfindungsgemäß durch die Merkmale der Ansprüche 1 und 12 gelöst, während vorteilhafte Ausgestaltungen und Weiterbildungen der Erfindung den Unteransprüchen entnommen werden können.

Die Erfindung geht aus von einem Garsystem, insbesondere von einem Induktionsgarsystem, vorteilhaft von einem Kochsystem und vorzugsweise von einem Induktionskochsystem, mit zumindest einem Gargeschirr, welches zumindest einen Lebensmittelaufnahmeraum wenigstens teilweise definiert und/oder begrenzt, und mit zumindest einer Sensoreinheit, welche zu einer Detektion zumindest einer Garkenngröße vorgesehen ist, wobei die Sensoreinheit in wenigstens einem Betriebszustand wenigstens teilweise auf einer dem Lebensmittelaufnahmeraum abgewandten Seite eines Gargeschirrbodens des Gargeschirrs an dem Gargeschirr befestigt ist.

Es wird vorgeschlagen, dass die Sensoreinheit zumindest eine elektrische Koppelstelle und zumindest eine Elektronikeinheit aufweist, welche zu einer lösbaren Verbindung mit der Koppelstelle der Sensoreinheit vorgesehen ist.

Durch eine derartige Ausgestaltung kann insbesondere ein gattungsgemäßes System vorteilhaft weiterentwickelt werden. Insbesondere in einem Vergleich zu einer Einbettung und/oder Integration der Sensoreinheit in dem Gargeschirrboden, kann insbesondere eine hohe Flexibilität erzielt werden, und zwar insbesondere da die Sensoreinheit insbesondere flexibel an dem Gargeschirrboden angeordnet und/oder vorteilhaft an verschiedenen und/oder beliebigen Gargeschirren angeordnet werden kann. Es kann insbesondere mit geringem Entwicklungsaufwand eine verhältnismäßig optimale Lösung bereitgestellt werden, wodurch insbesondere eine schnelle Markteinführung ermöglicht werden kann.

Insbesondere im Fall, in welchem die Garkenngröße eine Temperatur ist, können insbesondere temperaturkontrollierte Garprozesse optimal durchgeführt werden und insbesondere optimale Garergebnisse erzielt werden.

Es kann insbesondere eine optimale Detektion der Garkenngröße ermöglicht werden, und zwar insbesondere unabhängig von Art und/oder Zustand zumindest eines Garguts, welches sich insbesondere in dem Lebensmittelaufnahmeraum befindet, und/oder unabhängig von einem Typ des Gargeschirrs, da insbesondere eine Detektion mittels der Sensoreinheit unabhängig ist von einer Kopplung des Gargeschirrs mit zumindest einer unterhalb einer Arbeitsplatte befindlichen Einheit.

Unter einem "Garsystem" soll insbesondere ein System verstanden werden, welches zumindest ein Gargeräteobjekt und/oder zumindest ein Gargerät und/oder zumindest ein Gargerätezubehörobjekt aufweist, und welches insbesondere zusätzlich zumindest ein Küchenobjekt und/oder zumindest eine weitere Baueinheit aufweisen könnte, das/die insbesondere von einem Gargeräteobjekt und/oder von einem Gargerät und/oder von einem Gargerätezubehörobjekt verschieden ausgebildet ist. Unter einem "Gargeräteobjekt" soll insbesondere zumindest ein Teil, insbesondere eine Unterbaugruppe, eines Gargeräts, insbesondere eines Induktionsgargeräts, verstanden werden. Unter einem "Gargerätezubehörobjekt" soll insbesondere ein Objekt verstanden werden, welches insbesondere zu einem Gebrauch und/oder zu einer Verwendung mit einem Gargerät vorgesehen ist und/oder welches insbesondere als ein Zubehör für ein Gargerät ausgebildet ist. Unter einem "Küchenobjekt" soll insbesondere ein Objekt verstanden werden, welches zu einem Gebrauch und/oder zu einer Verwendung und/oder zu einer Anordnung in einer Küche vorgesehen ist, und zwar insbesondere zu einer Bearbeitung und/oder Behandlung und/oder Aufbewahrung zumindest eines Lebensmittels. Zumindest ein Gargerät könnte beispielsweise ein Backofen und/oder ein Kochfeld und/oder eine Mikrowelle und/oder ein Grillgerät sein.

Beispielsweise könnte das Garsystem zumindest ein Gargeräteobjekt aufweisen. Zumindest ein Gargeräteobjekt könnte beispielsweise zumindest eine Steuereinheit und/oder zumindest eine Bedienerschnittstelle und/oder zumindest eine Gargeräte-Gehäuseeinheit und/oder zumindest eine Gargeräte-Heizeinheit und/oder zumindest einen Wechselrichter und/oder zumindest eine Geräteplatte, welche insbesondere eine als Kochfeldplatte ausgebildete Aufstellplatte ausgebildet sein könnte, und/oder zumindest eine Abzugseinheit und/oder zumindest eine Gargeräteelektronik aufweisen. Insbesondere alternativ oder zusätzlich, insbesondere zu dem Gargeräteobjekt, könnte das Garsystem beispielsweise zumindest ein Gargerät und insbesondere zusätzlich zu dem Gargerät zumindest eine weitere Baueinheit aufweisen, wie insbesondere zumindest eine Geräteplatte, welche insbesondere eine als Arbeitsplatte ausgebildete Aufstellplatte ausgebildet sein könnte.

Beispielsweise könnte zumindest ein Gargerätezubehörobjekt eine weitere Sensoreinheit zur externen Messung einer Temperatur eines Gargeschirrs und/oder eines Garguts aufweisen. Zumindest ein Gargerätezubehörobjekt könnte, insbesondere alternativ oder zusätzlich, beispielsweise ein Gargeschirr und/oder eine Aufstelleinheit und/oder ein Kontaktmodul aufweisen, welches insbesondere zu einer Anordnung an dem Gargeschirr und/oder an der Aufstelleinheit vorgesehen sein könnte.

Zumindest ein Küchenobjekt könnte beispielsweise eine Küchenmaschine und/oder eine Unterbaugruppe einer Küchenmaschine, insbesondere einen Küchenmaschinenbehälter, aufweisen. Insbesondere alternativ oder zusätzlich, könnte zumindest ein Küchenobjekt insbesondere ein Reinigungsgerät und/oder ein Kältegerät aufweisen. Zumindest eine weitere Baueinheit könnte beispielsweise ein Mobilgerät und/oder eine Recheneinheit, wie beispielsweise einen Computer, aufweisen.

Unter einem "Gargeschirr" soll insbesondere eine Einheit verstanden werden, welche insbesondere den Lebensmittelaufnahmeraum wenigstens teilweise definiert und welche insbesondere zu einer Beheizung, insbesondere durch zumindest eine Heizeinheit, insbesondere des Garsystems und/oder zumindest eines Gargeräts, vorgesehen ist und welche insbesondere dazu vorgesehen ist, mittels durch die Beheizung aufgenommener Energie zumindest ein in dem Lebensmittelaufnahmeraum angeordnetes Lebensmittel zu erhitzen und/oder zu garen und/oder warmzuhalten. Beispielsweise könnte das Gargeschirr zu einem Einbringen in zumindest einen Garraum, insbesondere eines als Ofen ausgebildeten Gargeräts, vorgesehen sein. Vorzugsweise ist das Gargeschirr zu einem Aufstellen auf zumindest einer Aufstellplatte, insbesondere zum Zweck einer Beheizung, vorgesehen. Das Gargeschirr könnte beispielsweise zumindest einen Topf und/oder zumindest eine Pfanne und/oder zumindest ein Backblech aufweisen.

Das Garsystem weist insbesondere zumindest eine Aufstellplatte auf, welche insbesondere zu einem Aufstellen von Gargeschirr, insbesondere zumindest zu einem Aufstellen des Gargeschirrs, vorgesehen ist. Unter einer "Aufstellplatte" soll insbesondere zumindest eine insbesondere plattenartige Einheit verstanden werden, welche zu einem Aufstellen wenigstens eines Gargeschirrs und/oder zu einem Auflegen wenigstens eines Garguts zum Zweck der Beheizung vorgesehen ist. Die Aufstellplatte könnte beispielsweise als ein Teilbereich zumindest einer Arbeitsplatte, insbesondere zumindest einer Küchenarbeitsplatte, insbesondere des Garsystems, ausgebildet sein. Alternativ oder zusätzlich könnte die Aufstellplatte als eine Kochfeldplatte ausgebildet sein. Die als Kochfeldplatte ausgebildete Aufstellplatte könnte insbesondere zumindest einen Teil eines Kochfeldaußengehäuses ausbilden und insbesondere gemeinsam mit zumindest einer Außengehäuseeinheit, mit welcher die als Kochfeldplatte ausgebildete Aufstellplatte in wenigstens einem montierten Zustand insbesondere verbunden sein könnte, das Kochfeldaußengehäuse wenigstens zu einem Großteil ausbilden. Die Aufstellplatte könnte beispielsweise wenigstens zu einem Großteil aus Glas und/oder aus Glaskeramik und/oder aus Neolith und/oder aus Dekton und/oder aus Holz und/oder aus Marmor und/oder aus Stein, insbesondere aus Naturstein, und/oder aus Schichtstoff und/oder aus Metall und/oder aus Kunststoff und/oder aus Keramik gebildet sein.

Unter "wenigstens zu einem Großteil" soll insbesondere zu einem Anteil, insbesondere einem Massenanteil und/oder einem Volumenanteil und/oder einem Anteil einer Anzahl, von mindestens 70 %, insbesondere von mindestens 80 %, vorteilhaft von mindestens 90 % und vorzugsweise von mindestens 95 % verstanden werden.

Insbesondere weist das Garsystem zumindest eine Heizeinheit auf, welche insbesondere wenigstens zu einem Großteil in dem Gargerät, insbesondere in dem Kochfeld, integriert ist. Beispielsweise könnte das Garsystem zumindest zwei, insbesondere zumindest drei, vorteilhaft zumindest vier, besonders vorteilhaft zumindest acht, vorzugsweise zumindest zwölf und besonders bevorzugt eine Vielzahl an Heizeinheiten aufweisen, welche insbesondere jeweils wenigstens zu einem Großteil in dem Gargerät, insbesondere in dem Kochfeld, integriert sein könnten.

Unter der Wendung, dass das Gargeschirr zumindest einen Lebensmittelaufnahmeraum "wenigstens teilweise" definiert, soll insbesondere verstanden werden, dass das Gargeschirr den Lebensmittelaufnahmeraum alleine definiert und/oder dass das Gargeschirr den Lebensmittelaufnahmeraum gemeinsam mit zumindest einer weiteren Einheit definiert, wie beispielsweise mit zumindest einem dem Gargeschirr zugeordneten Gargeschirrdeckel, insbesondere des Garsystems.

Der Lebensmittelaufnahmeraum ist insbesondere zu einer Aufnahme und/oder Lagerung zumindest eines Lebensmittels vorgesehen, und zwar insbesondere zum Zweck einer Beheizung von in dem Lebensmittelaufnahmeraum angeordneten Lebensmitteln. In einer Aufstelllage begrenzt das Gargeschirr den Lebensmittelaufnahmeraum insbesondere in zumindest einer Ebene, vorteilhaft in mehreren Ebenen, welche insbesondere parallel zu einer Haupterstreckungsebene der Aufstellplatte ausgerichtet ist/sind, um einen Winkelbereich von mindestens 90 °, insbesondere von mindestens 180 °, vorteilhaft von mindestens 270 °, besonders vorteilhaft von mindestens 300 °, vorzugsweise von mindestens 330 ° und besonders bevorzugt von mindestens 350 °.

Unter einer "Haupterstreckungsebene" eines Objekts soll insbesondere eine Ebene verstanden werden, welche parallel zu einer größten Seitenfläche eines kleinsten gedachten geometrischen Quaders ist, welcher das Objekt gerade noch vollständig umschließt, und insbesondere durch den Mittelpunkt des Quaders verläuft.

Unter einer "Sensoreinheit" soll insbesondere eine Einheit verstanden werden, welche zumindest einen Detektor zu einer Detektion zumindest der Garkenngröße aufweist und welche insbesondere dazu vorgesehen ist, einen die Garkenngröße kennzeichnenden Wert auszugeben, wobei es sich bei der Garkenngröße vorteilhaft um eine physikalische und/oder chemische Größe handelt. Beispielsweise könnte die Sensoreinheit die Garkenngröße in wenigstens einem Betriebszustand aktiv detektieren, wie insbesondere durch Erzeugen und Aussenden eines Messsignals, insbesondere eines elektrischen und/oder optischen Messsignals. Alternativ oder zusätzlich könnte die Sensoreinheit die Garkenngröße in wenigstens einem Betriebszustand insbesondere passiv detektieren, wie insbesondere durch eine Erfassung von zumindest einer Eigenschaftsänderung zumindest eines Sensorbauteils und/oder des Detektors.

Insbesondere könnte die Sensoreinheit zumindest zwei, insbesondere zumindest drei, vorteilhaft zumindest vier, besonders vorteilhaft zumindest fünf, vorzugsweise zumindest sechs und besonders bevorzugt mehrere Detektoren aufweisen, wodurch insbesondere eine besonders genaue Detektion der Garkenngröße und/oder eine geringe Wahrscheinlichkeit einer Fehldetektion ermöglicht werden kann.

Die Sensoreinheit ist insbesondere zu einer Befestigung an dem Gargeschirr vorgesehen, und zwar insbesondere an zumindest einer dem Lebensmittelaufnahmeraum abgewandten Seite zumindest einer Wandung des Gargeschirrs. Die Wandung des Gargeschirrs ist insbesondere der Gargeschirrboden. Insbesondere zusätzlich, könnte die Wandung des Gargeschirrs zumindest eine Seitenwandung des Gargeschirrs sein.

Insbesondere ist die Garkenngröße eine Kenngröße, welche insbesondere zumindest einen Garzustand und/oder zumindest einen Garprozess wenigstens teilweise charakterisiert. Beispielsweise könnte die Garkenngröße eine Temperatur, insbesondere zumindest eines Garguts, welches insbesondere in dem Lebensmittelaufnahmeraum angeordnet sein könnte, und/oder zumindest eine Wandung des Gargeschirrs sein. Die Garkenngröße könnte beispielsweise ein Garzustand, wie beispielsweise Sauttieren und/oder Kochen und/oder Garen und/oder Dampfgaren und/oder Sieden und/oder Pochieren und/oder Grillen und/oder Backen und/oder Warmhalten und/oder Erhitzen und/oder Blanchieren und/oder Braten und/oder Dämpfen und/oder Frittieren und/oder Dünsten und/oder Schmoren, sein. Insbesondere alternativ oder zusätzlich, könnte die Garkenngröße insbesondere eine, insbesondere dem Gargeschirr zugeführte, Heizleistung sein.

Unter der Wendung, dass die Sensoreinheit in wenigstens einem Betriebszustand "wenigstens teilweise" auf einer dem Lebensmittelaufnahmeraum abgewandten Seite eines Gargeschirrbodens des Gargeschirrs an dem Gargeschirr befestigt ist, soll insbesondere verstanden werden, dass die Sensoreinheit zumindest einen Teilbereich aufweist, welcher in dem Betriebszustand auf einer dem Lebensmittelaufnahmeraum abgewandten Seite des Gargeschirrbodens an dem Gargeschirr befestigt ist, und insbesondere zusätzlich, insbesondere zumindest einen weiteren Teilbereich aufweisen könnte, welcher beispielsweise an zumindest einer von dem Gargeschirrboden verschiedenen Wandung des Gargeschirrs befestigt sein könnte und/oder welcher beispielsweise beabstandet zu dem Gargeschirr, insbesondere zu Wandungen des Gargeschirrs, angeordnet sein könnte.

Die Sensoreinheit ist in dem Betriebszustand insbesondere unmittelbar an dem Gargeschirr, insbesondere an dem Gargeschirrboden und/oder an zumindest einer Wandung des Gargeschirrs, befestigt. Insbesondere weist die Sensoreinheit in dem Betriebszustand einen maximalen Abstand zu dem Gargeschirr, insbesondere zu der Wandung des Gargeschirrs, an welcher die Sensoreinheit insbesondere befestigt ist, von maximal 10 cm, insbesondere von maximal 5 cm, vorteilhaft von maximal 3 cm, besonders vorteilhaft von maximal 1 cm, vorzugsweise von maximal 0,5 cm und besonders bevorzugt von maximal 0,1 cm auf.

Der Gargeschirrboden ist insbesondere eine Wandung des Gargeschirrs, welche in einer Aufstelllage einer Aufstellfläche und/oder einer Aufstellplatte und/oder einem Untergrund zugewandt angeordnet ist. Insbesondere ist der Gargeschirrboden in einer Aufstelllage in einem einer Aufstellfläche und/oder einer Aufstellplatte und/oder einem Untergrund zugewandten Bereich des Gargeschirrs angeordnet. Insbesondere im Fall eines Gargeschirrs, welches frei ist von der Sensoreinheit, ist der Gargeschirrboden in einer Aufstelllage insbesondere wenigstens abschnittsweise in Kontakt mit einer Aufstellfläche und/oder einer Aufstellplatte angeordnet. Der Untergrund könnte beispielsweise ein Boden und/oder ein Fußboden sein.

Die Sensoreinheit könnte beispielsweise durch zumindest eine formschlüssige und/oder kraftschlüssige und/oder stoffschlüssige Verbindung an dem Gargeschirr befestigt sein. Insbesondere könnte eine Verbindung, mittels welcher die Sensoreinheit insbesondere an dem Gargeschirr befestigt ist, von dem Gargeschirr und/oder der Sensoreinheit bewirkt und/oder hervorgerufen sein. Das Garsystem könnte, insbesondere alternativ oder zusätzlich, zumindest eine Befestigungseinheit aufweisen, welche insbesondere eine Verbindung, mittels welcher die Sensoreinheit insbesondere an dem Gargeschirr befestigt ist, bewirken und/oder hervorrufen könnte und welche insbesondere die Sensoreinheit an dem Gargeschirr befestigen könnte. Insbesondere könnte die Befestigungseinheit von dem Gargeschirr und der Sensoreinheit verschieden ausgebildet sein.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Ferner wird vorgeschlagen, dass die Sensoreinheit mittels zumindest einer Klebeverbindung an dem Gargeschirr befestigt ist. Insbesondere ist die Sensoreinheit stoffschlüssig an dem Gargeschirr befestigt. Dadurch kann insbesondere eine hohe Stabilität und/oder eine geringe Wahrscheinlichkeit eines ungewollten Loslösens der Sensoreinheit von dem Gargeschirr erreicht werden.

Insbesondere könnte die Sensoreinheit zumindest einen Grundkörper und insbesondere zumindest einen Detektor aufweist, welcher zumindest an und/oder in dem Grundkörper angeordnet sein könnte. Der Grundkörper könnte beispielsweise eine Dicke aufweisen, welche insbesondre wesentlich kleiner sein könnte als eine Längserstreckung des Grundkörpers und insbesondere als eine Quererstreckung des Grundkörpers. Beispielsweise könnte der Grundkörper, insbesondere bei einer senkrechten Betrachtung auf eine Haupterstreckungsebene des Grundkörpers, eine n-eckige und/oder rechteckige und/oder quadratische und/oder ovale, insbesondere elliptische und/oder runde, Gestalt aufweisen. Der Grundkörper weist, insbesondere bei einer senkrechten Betrachtung auf eine Haupterstreckungsebene des Grundkörpers, vorteilhaft eine streifenartige Gestalt auf. Vorzugsweise weist die Sensoreinheit zumindest einen, insbesondere streifenartigen, Grundkörper und zumindest einen Detektor auf, welcher an und/oder in dem Grundkörper angeordnet ist. Der Grundkörper weist insbesondere eine Dicke auf, welche wesentlich kleiner ist als eine Längserstreckung des Grundkörpers und/oder als eine Quererstreckung des Grundkörpers. Unter einer "Längserstreckung" eines Objekts soll insbesondere eine Länge einer längsten Seite eines kleinsten gedachten geometrischen Quaders verstanden werden, welcher das Objekt gerade noch vollständig umschließt. Unter einer "Erstreckung" eines Objekts soll insbesondere ein maximaler Abstand zweier Punkte einer senkrechten Projektion des Objekts auf eine Ebene verstanden werden. Unter einer "Quererstreckung" eines Objekts soll insbesondere eine Länge einer zweitlängsten Seite eines kleinsten gedachten geometrischen Quaders verstanden werden, welcher das Objekt gerade noch vollständig umschließt. Unter einer "Dicke" eines Objekts soll insbesondere eine Länge einer kürzesten Seite eines kleinsten gedachten geometrischen Quaders verstanden werden, welcher das Objekt gerade noch vollständig umschließt. Insbesondere ist die Dicke des Objekts senkrecht zu der Längserstreckung des Objekts ausgerichtet. Insbesondere ist die Dicke des Objekts senkrecht zu der Quererstreckung des Objekts ausgerichtet. Insbesondere ist die Längserstreckung des Objekts senkrecht zu der Quererstreckung des Objekts ausgerichtet. Der Grundkörper weist insbesondere eine Längserstreckung auf, welche wesentlich größer ist als eine Dicke des Grundkörpers und/oder als eine Quererstreckung des Grundkörpers. Insbesondere ist der Detektor zumindest an dem Grundkörper angeordnet. Beispielsweise könnte der Detektor an dem Grundkörper befestigt sein. Der Detektor könnte, insbesondere alternativ oder zusätzlich, in den Grundkörper eingebracht sein und/oder als eine Leiterbahn des Grundkörpers ausgebildet sein. Vorteilhaft weist die Sensoreinheit zumindest zwei, insbesondere zumindest drei, vorteilhaft zumindest vier, besonders vorteilhaft zumindest fünf, vorzugsweise zumindest sechs und besonders bevorzugt mehrere Detektoren auf, welche insbesondere jeweils an und/oder in dem Grundkörper angeordnet sind. Dadurch kann insbesondere eine kompakte und/oder stabile Ausgestaltung erzielt werden.

Vorteilhaft ist der Grundkörper folienartig und/oder als eine Folie ausgebildet. Der Grundkörper ist insbesondere als eine selbstklebende Folie ausgebildet. Der Grundkörper unterscheidet sich insbesondere von einem Film und/oder von einer Beschichtung und/oder von einem Lack. Insbesondere ist der Grundkörper, insbesondere vor einer Befestigung an dem Gargeschirr separat zu dem Gargeschirr ausgebildet und insbesondere relativ zu dem Gargeschirr bewegbar. Der Grundkörper ist insbesondere in wenigstens einem demontierten Zustand als ein eigenständiges Objekt und/oder als eine eigenständige Baueinheit ausgebildet. Dadurch kann insbesondere ein ausreichend flexibler Grundkörper bereitgestellt werden, welcher insbesondere relativ einfach zu handhaben ist, insbesondere bei einer Befestigung an dem Gargeschirr. Insbesondere kann ein optimal an seinen Verwendungszweck angepasster Grundkörper bereitgestellt werden.

Weiterhin wird vorgeschlagen, dass sich die Sensoreinheit in dem Betriebszustand bei einer senkrechten Betrachtung auf eine Haupterstreckungsebene des Gargeschirrbodens über einen Anteil von mindestens 20 %, insbesondere von mindestens 35 %, vorteilhaft von mindestens 50 %, besonders vorteilhaft von mindestens 60 %, vorzugsweise von mindestens 70 % und besonders bevorzugt von mindestens 80 % einer maximalen Erstreckung des Gargeschirrbodens erstreckt. Die maximale Erstreckung des Gargeschirrbodens entspricht, insbesondere bei einer senkrechten Betrachtung auf eine Haupterstreckungsebene des Gargeschirrbodens, insbesondere einer Längserstreckung des Gargeschirrbodens und/oder einem Durchmesser des Grundkörpers. Dadurch kann insbesondere eine optimierte Detektion der Garkenngröße ermöglicht werden, da insbesondere die Garkenngröße über weite Bereiche des Gargeschirrbodens detektiert werden kann.

Ferner wird vorgeschlagen, dass die Sensoreinheit zumindest eine Induktionseinheit aufweist, welche zu einer induktiven Energieaufnahme von zumindest einer Induktionseinheit zumindest eines Gargeräts vorgesehen ist. Insbesondere weist das Garsystem zumindest eine Induktionseinheit und insbesondere zumindest ein Gargerät auf, in welchem die Induktionseinheit insbesondere wenigstens zu einem Großteil und vorteilhaft vollständig integriert ist. Die Induktionseinheit des Gargeräts könnte insbesondere wenigstens teilweise einstückig mit der Heizeinheit ausgebildet sein. Beispielsweise könnte das Garsystem zumindest zwei, insbesondere zumindest drei, vorteilhaft zumindest vier, besonders vorteilhaft zumindest acht, vorzugsweise zumindest zwölf und besonders bevorzugt eine Vielzahl an Induktionseinheiten aufweisen, welche insbesondere jeweils wenigstens zu einem Großteil in dem Gargerät, insbesondere in dem Kochfeld, integriert sein könnten. Die Induktionseinheit der Sensoreinheit weist insbesondere zumindest eine Spule, insbesondere zu einem Empfang von induktiver Energie von der Induktionseinheit des Gargeräts, auf. Dadurch kann die Sensoreinheit insbesondere mit einfachen Mitteln mit Energie versorgt werden. Insbesondere kann eine kompakte Sensoreinheit bereitgestellt werden, da insbesondere auf eine in der Sensoreinheit integrierte Versorgungseinheit verzichtet werden könnte.

In dem Betriebszustand könnte die Sensoreinheit, insbesondere ausschließlich, beispielsweise auf der dem Lebensmittelaufnahmeraum abgewandten Seite des Gargeschirrbodens des Gargeschirrs angeordnet und/oder an dem Gargeschirr befestigt sein. Vorzugsweise ist die Sensoreinheit in dem Betriebszustand wenigstens teilweise auf einer dem Lebensmittelaufnahmeraum abgewandten Seite einer Seitenwandung des Gargeschirrs an dem Gargeschirr befestigt. Insbesondere weist die Seitenwandung des Gargeschirrs zumindest einen Teilbereich auf, welcher wenigstens im Wesentlichen senkrecht zu einer Haupterstreckungsebene des Gargeschirrbodens ausgerichtet ist. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90 ° einschließen und der Winkel eine maximale Abweichung von insbesondere maximal 8 °, vorteilhaft maximal 5 ° und besonders vorteilhaft maximal 2 ° aufweist. Die Sensoreinheit könnte sich in dem Betriebszustand, insbesondere bei einer senkrechten Betrachtung auf die Seitenwandung des Gargeschirrs, über einen Anteil von mindestens 10 %, insbesondere von mindestens 20 %, vorteilhaft von mindestens 30 %, besonders vorteilhaft von mindestens 40 %, vorzugsweise von mindestens 50 % und besonders bevorzugt von mindestens 60 % einer maximalen Erstreckung der Seitenwandung des Gargeschirrs erstrecken. Die maximale Erstreckung der Seitenwandung des Gargeschirrs könnte insbesondere wenigstens im Wesentlichen senkrecht zu einer Haupterstreckungsebene des Gargeschirrbodens ausgerichtet sein. Dadurch können insbesondere optimale Garergebnisse ermöglicht werden, da insbesondere eine Temperatur eines insbesondere in dem Lebensmittelaufnahmeraum angeordneten Garguts optimal detektiert werden kann. Insbesondere können selbst Temperaturgefälle in dem Gargut detektiert werden, wie beispielsweise ein Temperaturgefälle zwischen einem dem Gargeschirrboden in einer Aufstelllage abgewandten Bereich des Garguts und einem dem Gargeschirrboden in einer Aufstelllage zugewandten Bereich des Garguts.

Insbesondere sind die Koppelstelle der Sensoreinheit und die Elektronikeinheit zu einer Steckverbindung vorgesehen und insbesondere in dem Betriebszustand mittels einer Steckverbindung miteinander verbunden. Beispielsweise könnte die Koppelstelle der Sensoreinheit zumindest einen weiblichen Stecker, insbesondere zumindest eine Steckerbuchse, und die Elektronikeinheit zumindest einen männlichen Stecker aufweisen. Vorteilhaft weist die Elektronikeinheit zumindest einen
weiblichen Stecker, insbesondere zumindest eine Steckerbuchse, und die Koppelstelle der Sensoreinheit zumindest einen männlichen Stecker auf. Dadurch kann insbesondere eine hohe Flexibilität erzielt werden. Insbesondere kann durch Trennen der Verbindung der Elektronikeinheit und der Koppelstelle der Sensoreinheit eine spülmaschinengeeignete Kombination von Gargeschirr und Sensoreinheit bereitgestellt werden, wodurch insbesondere ein hoher Bedienkomfort erreicht werden kann.

Ferner wird vorgeschlagen, dass die Sensoreinheit zumindest eine Halteeinheit aufweist, welche zu einer Befestigung an zumindest einer Seitenwandung des Gargeschirrs und zu einer Halterung der Elektronikeinheit vorgesehen ist. Die Halteeinheit könnte beispielsweise durch zumindest eine formschlüssige und/oder kraftschlüssige und/oder stoffschlüssige Verbindung an der Seitenwandung des Gargeschirrs befestigt sein. In dem Betriebszustand ist die Halteeinheit insbesondere an der Seitenwandung des Gargeschirrs befestigt, und zwar vorteilhaft mittels zumindest einer stoffschlüssigen Verbindung und/oder mittels zumindest einer Klebeverbindung. Unter einer "Halteeinheit" soll insbesondere eine Einheit verstanden werden, welche in dem Betriebszustand zumindest eine Gewichtskraft der Elektronikeinheit wenigstens teilweise, insbesondere wenigstens zu einem Großteil und vorteilhaft vollständig aufnimmt und insbesondere an zumindest eine weitere Einheit weiterleitet, wie insbesondere das Gargeschirr. Die Halteeinheit weist vorteilhaft zumindest einen Aufnahmebereich auf, welcher zu einer wenigstens teilweisen Aufnahme der Elektronikeinheit vorgesehen ist. Insbesondere ist die Elektronikeinheit in dem Betriebszustand wenigstens teilweise in der Halteeinheit, insbesondere in dem Aufnahmebereich der Halteeinheit, angeordnet. Dadurch kann insbesondere eine optimale Halterung und/oder Lagerung der Elektronikeinheit bereitgestellt werden, wodurch insbesondere eine langlebige Ausgestaltung und/oder eine geringe Wahrscheinlichkeit einer Beschädigung der Elektronikeinheit erzielt werden kann.

Beispielsweise könnte die Sensoreinheit zumindest eine Kommunikationseinheit aufweisen, welche insbesondere die detektierte Garkenngröße an zumindest eine Geräte-Steuereinheit, die insbesondere wenigstens teilweise, vorteilhaft wenigstens zu einem Großteil und vorzugsweise vollständig in dem Gargerät, insbesondere in dem Kochfeld, integriert sein könnte, übertragen könnte. Das Garsystem könnte insbesondere zumindest eine Geräte-Steuereinheit, vorteilhaft zumindest die Geräte-Steuereinheit, aufweisen, welche insbesondere die empfangene Garkenngröße auswerten und/oder verarbeiten könnte. Vorzugsweise weist die Elektronikeinheit zumindest eine Steuereinheit auf, welche zumindest zu einer Verarbeitung der Garkenngröße und/oder Auswertung der Garkenngröße vorgesehen ist. Die Steuereinheit könnte beispielsweise zumindest eine Recheneinheit und insbesondere zusätzlich zu der Recheneinheit zumindest eine Speichereinheit aufweisen, in welcher insbesondere zumindest ein Steuer- und/oder Regelprogramm gespeichert sein könnte, das insbesondere zu einer Ausführung durch die Recheneinheit vorgesehen sein könnte. Beispielsweise könnte die Steuereinheit zu einer Kommunikation mit der Geräte-Steuereinheit vorgesehen sein und in dem Betriebszustand insbesondere die detektierte Garkenngröße und/oder zumindest eine Kenngrößeninformation hinsichtlich der detektierten Garkenngröße an die Geräte-Steuereinheit übermitteln, und zwar insbesondere drahtlos und vorteilhaft mittels zumindest einer Funktechnik, welche insbesondere einen geringen Energiebedarf und/oder eine Reichweite von maximal 100 m, insbesondere von maximal 50 m, vorteilhaft von maximal 30 m, besonders vorteilhaft von maximal 20 m, vorzugsweise von maximal 15 m und besonders bevorzugt von maximal 10 m aufweist. Die Kenngrößeninformation hinsichtlich der detektierten Garkenngröße könnte beispielsweise ein Ergebnis einer Auswertung und/oder Verarbeitung der Garkenngröße aufweisen. Alternativ oder zusätzlich könnte die Kenngrößeninformation hinsichtlich der detektierten Garkenngröße insbesondere eine Handlungsanweisung und/oder einen Befehl zu einer Ausführung zumindest einer Aktion aufweisen. Unter einer "Geräte-Steuereinheit" soll insbesondere eine elektronische Einheit verstanden werden, welche in wenigstens einem Betriebszustand zumindest eine Gargerätefunktion und/oder zumindest eine Gargerätehauptfunktion, insbesondere eine Beheizung zumindest eines Gargeschirrs, steuert und/oder regelt. Die Geräte-Steuereinheit weist insbesondere zumindest eine Recheneinheit und insbesondere zusätzlich zu der Recheneinheit zumindest eine Speichereinheit auf, in welcher insbesondere zumindest ein Steuer- und/oder Regelprogramm gespeichert ist, das insbesondere zu einer Ausführung durch die Recheneinheit vorgesehen ist. Die Steuereinheit ist insbesondere dazu vorgesehen, insbesondere im Fall einer Verbindung zwischen der elektrischen Koppelstelle, welche insbesondere zumindest an dem Grundkörper angeordnet ist, und der elektrischen Koppelstelle der Elektronikeinheit und/oder insbesondere im Fall eines Empfangs der Garkenngröße, zumindest eine Kommunikation mit zumindest einer Geräte-Steuereinheit des Gargeräts zu starten. Dadurch kann insbesondere eine qualitativ hochwertige Sensoreinheit bereitgestellt werden, wodurch insbesondere ein hoher Bedienkomfort erzielt werden kann. Insbesondere kann auf eine zusätzliche Steuereinheit zu einer Auswertung der Garkenngröße verzichtet werden, wodurch insbesondere eine geringe Bauteilevielfalt und/oder eine geringe Lagerhaltung erzielt werden kann. Vorteilhaft kann ein geringes Risiko eines Fehlers im Zuge einer Übertragung der Garkenngröße von der Sensoreinheit an eine externe Steuereinheit erreicht werden, wodurch insbesondere eine optimale und/oder qualitativ hochwertige Auswertung der Garkenngröße erreicht werden kann.

Weiterhin wird vorgeschlagen, dass die Elektronikeinheit zumindest eine Ausgabeeinheit aufweist, welche zu einer, insbesondere akustischen und/oder haptischen und/oder vorteilhaft optischen, Ausgabe zumindest einer Information vorgesehen ist. Unter einer "Ausgabeeinheit" soll insbesondere eine Einheit verstanden werden, welche dazu vorgesehen ist, einem Bediener insbesondere optisch und/oder akustisch und/oder haptisch zumindest die Information bereitzustellen. Die Ausgabeeinheit könnte insbesondere dazu vorgesehen sein, wenigstens ein akustisches Signal und/oder insbesondere wenigstens eine akustische Sequenz auszugeben, wie beispielsweise einen Klingelton und/oder ein Warnsignal und/oder eine Aufforderung in Form eines insbesondere vorgefertigten Satzes. Alternativ oder zusätzlich könnte die Ausgabeeinheit dazu vorgesehen sein, eine optische Ausgabe bereitzustellen, wie beispielsweise eine Anzeige wenigstens eines Bilds und/oder wenigstens eines Texts und/oder wenigstens einer Ziffer und/oder wenigstens einer Animation. Beispielsweise könnte die Ausgabeeinheit zumindest ein Klangmittel aufweisen, welches insbesondere ein Lautsprecher sein könnte. Alternativ oder zusätzlich könnte die Ausgabeeinheit zumindest ein Leuchtelement, vorteilhaft eine LED, und/oder ein insbesondere hinterleuchtetes Display, insbesondere ein Matrixdisplay und/oder eine Flüssigkristallanzeige und/oder ein LCD-Display und/oder ein OLED-Display und/oder elektronisches Papier, aufweisen. Die Information könnte beispielsweise einen mit dem Gargeschirr verknüpften Status und/oder eine Zeitangabe und/oder eine Bedienaufforderung und/oder eine Handlungsaufforderung und/oder eine Auswahl aufweisen. Vorteilhaft könnte die Information zumindest eine Zustandsinformation, insbesondere hinsichtlich eines Zustands der Sensoreinheit, aufweisen. Insbesondere könnte die Ausgabeeinheit in dem Betriebszustand verschiedene Zustände der Sensoreinheit verschiedenartig ausgeben. Die Ausgabeeinheit könnte in dem Betriebszustand beispielsweise eine fehlerhafte und/oder fehlende Verbindung zwischen der Koppelstelle und der Elektronikeinheit und/oder eine Kopplung zwischen der Sensoreinheit und dem Gargerät und/oder eine Übertragung von Daten zwischen Sensoreinheit und dem Gargerät und/oder ein Vorliegen eines Errors und/oder einen ordnungsgemäßen Betrieb und/oder eine Detektion der Garkenngröße und/oder eine Energieübertragung an die Induktionseinheit der Sensoreinheit ausgeben, und zwar auf eine die jeweilige Information kennzeichnende Weise. Insbesondere könnte die Ausgabeeinheit in Abhängigkeit einer jeweiligen Information zumindest eine Information ausgeben, welche insbesondere in Farbe und/oder Intensität und/oder Dauer und/oder Kontinuität die Information kennzeichnen könnte. Dadurch kann insbesondere eine hohe Transparenz und/oder ein hoher Informationsgrad für einen Bediener erreicht werden, wodurch insbesondere ein hoher Bedienkomfort erzielt werden kann.

Beispielsweise könnte die Sensoreinheit zu einer Energieversorgung insbesondere ausschließlich die Induktionseinheit aufweisen und, insbesondere ausschließlich, im Fall einer Energieübertragung von der Induktionseinheit des Gargeräts an die Induktionseinheit der Sensoreinheit aktiviert sein. Vorzugsweise weist die Elektronikeinheit zumindest einen Akkumulator auf, welcher insbesondere in dem Betriebszustand zu einer Energieversorgung durch die Induktionseinheit vorgesehen ist. Insbesondere könnte der Akkumulator von der Induktionseinheit aufgenommene Energie wenigstens teilweise speichern. Die Sensoreinheit könnte, insbesondere im Fall einer fehlerhaften und/oder unterbrochenen Energieübertragung von der Induktionseinheit des Gargeräts an die Induktionseinheit der Sensoreinheit, sich insbesondere in einem aktivierten Zustand befinden, in welchem insbesondere der Akkumulator elektrische und/oder elektronische Baueinheiten der Sensoreinheit mit Energie versorgt. Insbesondere ist der Akkumulator eine wieder aufladbare Batterie. Dadurch kann insbesondere eine weitgehend unabhängige Sensoreinheit bereitgestellt werden, wodurch insbesondere eine hohe Flexibilität erzielt werden kann.

Die Sensoreinheit, insbesondere die Elektronikeinheit der Sensoreinheit, könnte beispielsweise zumindest einen Drucksensor und/oder zumindest einen Beschleunigungssensor aufweisen.

Der Drucksensor könnte beispielsweise zu einer Detektion eines Umgebungsdrucks und/oder eines Atmosphärendrucks vorgesehen sein. Insbesondere könnte die Steuereinheit und/oder die Geräte-Steuereinheit in Abhängigkeit von der Detektion des Drucksensors zumindest einen Klimaparameter ermitteln und insbesondere eine dem Gargeschirr zugeführte Heizleistung an den Klimaparameter anpassen. Der Klimaparameter könnte beispielsweise eine Wetterlage und/oder eine Höhenlage aufweisen. Dadurch kann insbesondere ein optimales Garergebnis ermöglicht werden.

Der Beschleunigungssensor könnte beispielsweise zu einer Detektion zumindest eines Loslösens der Sensoreinheit und/oder der Elektronikeinheit von dem Gargeschirr vorgesehen sein. Insbesondere ist der Beschleunigungssensor zu einer Detektion zumindest einer Beschleunigung und/oder zu einer Detektion zumindest einer Ortskoordinate und/oder zu einer Detektion zumindest einer Veränderung einer Ortskoordinate vorgesehen. Der Beschleunigungssensor könnte beispielsweise zu einer Detektion einer Orientierung der Elektronikeinheit relativ zu dem Gargeschirr vorgesehen sein, und zwar insbesondere durch Detektion zumindest einer Ortskoordinate. Insbesondere könnte die Steuereinheit in dem Betriebszustand in Abhängigkeit einer Detektion durch den Beschleunigungssensor, insbesondere in Abhängigkeit einer über eine vordefinierte Zeitspanne ausbleibenden Bewegung der Elektronikeinheit, welche insbesondere der Beschleunigungssensor in dem Betriebszustand detektiert, elektrische und/oder elektronische Baueinheiten der Sensoreinheit in zumindest einen Energiesparmodus und/oder in zumindest einen Standby-Modus überführen, um insbesondere Energie zu sparen und/oder eine lange Haltbarkeit des Akkumulators zu gewährleisten. Dadurch kann insbesondere eine fehlerfreie Anbringung und/oder Anordnung der Elektronikeinheit an dem Gargeschirr und/oder eine umweltschonende Ausgestaltung ermöglicht werden.

Es kann insbesondere eine Kombination von optimaler Temperaturkontrolle und/oder automatischer Zuordnung von Gargeschirr und Heizzone und/oder von induktiver Energiebereitstellung erzielt werden. Durch die induktive Energiebereitstellung kann insbesondere ein geringer Energieverbrauch der Elektronikeinheit und/oder eine langlebige Ausgestaltung der Elektronikeinheit und/oder des Akkumulators erreicht werden.

Weiterhin wird vorgeschlagen, dass die Sensoreinheit als Nachrüstbausatz ausgebildet ist. Insbesondere ist die Sensoreinheit separat zu dem Gargeschirr erwerbbar. Die Sensoreinheit ist insbesondere zu einer Befestigung an verschiedenen und/oder beliebigen Gargeschirren vorgesehen. Dadurch kann insbesondere die Sensoreinheit flexibel an zumindest einem beliebigen Gargeschirr befestigt werden, wodurch insbesondere auf kostengünstige Weise ein beliebiges Gargeschirr mit einer Vielzahl an zusätzlichen Funktionen ausgestattet werden kann.

Eine besonders hohe Flexibilität und/oder eine besonders optimale Detektion der Garkenngröße kann insbesondere erreicht werden durch ein Verfahren zu einem Betrieb eines erfindungsgemäßen Garsystems, bei welchem zumindest eine Sensoreinheit wenigstens teilweise auf einer zumindest einem Lebensmittelaufnahmeraum, welcher durch zumindest ein Gargeschirr wenigstens teilweise definiert ist, abgewandten Seite eines Gargeschirrbodens des Gargeschirrs an dem Gargeschirr befestigt wird, und zwar insbesondere stoffschlüssig und vorteilhaft mittels zumindest einer Klebeverbindung.

Das Garsystem soll hierbei nicht auf die oben beschriebene Anwendung und Ausführungsform beschränkt sein. Insbesondere kann das Garsystem zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination.

Es zeigen:
- Fig. 1: ein Garsystem mit einem Gargerät, mit einer Aufstellplatte, mit einem Gargeschirr und mit einer Sensoreinheit in einer schematischen Draufsicht,
- Fig. 2: einen Ausschnitt des Garsystems in einer schematischen perspektivischen Darstellung,
- Fig. 3: die Sensoreinheit in einer schematischen perspektivischen Darstellung,
- Fig. 4: eine Elektronikeinheit der Sensoreinheit in einer schematischen perspektivischen Darstellung,
- Fig. 5: die Elektronikeinheit in einer schematischen perspektivischen teilweisen Schnittdarstellung,
- Fig. 6: ein Diagramm eines Verfahrens zu einer Herstellung des Garsystems in einer schematischen Darstellung,
- Fig. 7: einen Ausschnitt eines alternativen Garsystems in einer schematischen perspektivischen Darstellung und
- Fig. 8: eine Sensoreinheit des Garsystems aus Figur 7 in einer schematischen perspektivischen Darstellung.

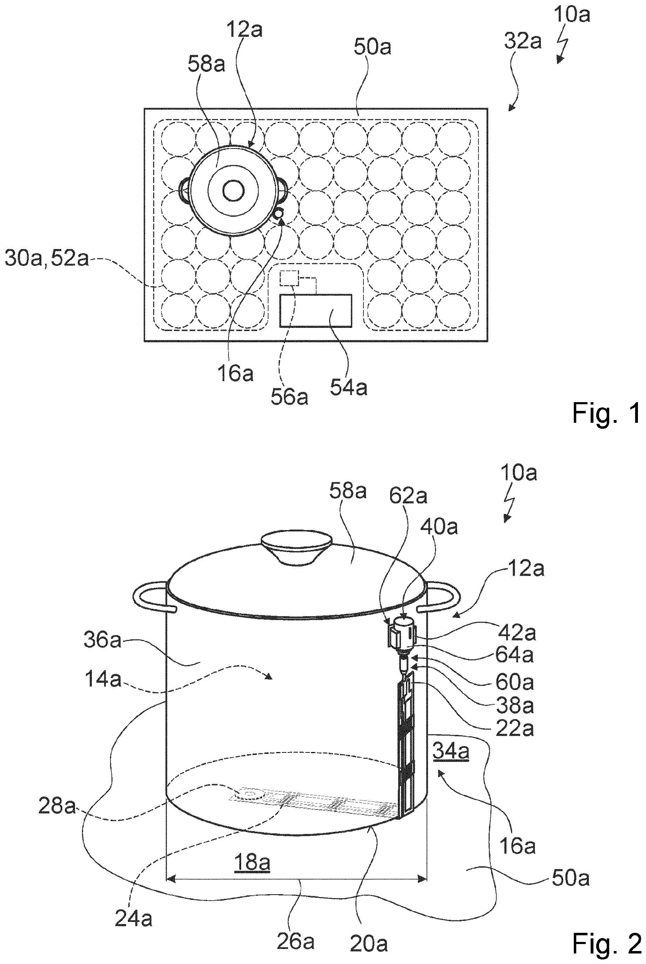

Figur 1 zeigt insbesondere ein Garsystem 10a, welches insbesondere als ein Induktionsgarsystem ausgebildet ist. Im vorliegenden Ausführungsbeispiel ist das Garsystem 10a insbesondere als ein Kochsystem, und zwar insbesondere als ein Induktionskochsystem, ausgebildet. Alternativ könnte das Garsystem 10a beispielsweise als ein Ofensystem, insbesondere als ein Induktionsofensystem, ausgebildet sein.

Das Garsystem 10a weist insbesondere zumindest ein und vorteilhaft genau ein Gargerät 32a auf. Das Gargerät 32a ist insbesondere als ein Induktionsgargerät ausgebildet. Das Gargerät 32a könnte beispielsweise als ein Ofen, und zwar insbesondere als ein Induktionsofen, ausgebildet sein. Im vorliegenden Ausführungsbeispiel ist das Gargerät 32a insbesondere als ein Kochfeld, und zwar insbesondere als ein Induktionskochfeld, ausgebildet. Das Gargerät 32a ist insbesondere speziell für das Garsystem 10a ausgebildet und/oder vorgesehen.

Das Garsystem 10a weist insbesondere zumindest eine und vorteilhaft genau eine Aufstellplatte 50a auf. In einem montierten Zustand bildet die Aufstellplatte 50a insbesondere eine Sichtfläche aus, welche in einem montierten Zustand insbesondere einem Bediener zugewandt angeordnet ist. Die Aufstellplatte 50a ist insbesondere zu einem Aufstellen von Gargeschirr 12a, insbesondere zum Zweck einer Beheizung des Gargeschirrs 12a, vorgesehen. Im vorliegenden Ausführungsbeispiel ist die Aufstellplatte 50a insbesondere als eine Kochfeldplatte ausgebildet. Die Aufstellplatte 50a ist insbesondere Teil des Gargeräts 32a.

Das Garsystem 10a weist insbesondere zumindest ein und vorteilhaft genau ein Gargeschirr 12a, insbesondere zumindest das und vorteilhaft genau das Gargeschirr 12a, auf. Das Gargeschirr 12a ist insbesondere zu einem Aufstellen auf der Aufstellplatte 50a, insbesondere zum Zweck einer Beheizung des Gargeschirrs 12a, vorgesehen.

Das Garsystem 10a weist insbesondere zumindest eine Heizeinheit 52a auf. Im vorliegenden Ausführungsbeispiel weist das Garsystem 10a insbesondere eine Vielzahl an Heizeinheiten 52a auf. Von mehrfach vorhandenen Objekten ist in den Figuren jeweils lediglich eines mit einem Bezugszeichen versehen.

Alternativ könnte das Garsystem 10a beispielsweise eine kleinere Anzahl an Heizeinheiten 52a aufweisen, wie beispielsweise genau eine Heizeinheit 52a und/oder zumindest zwei, insbesondere zumindest vier, vorteilhaft zumindest acht, besonders vorteilhaft zumindest zwölf und vorzugsweise mehrere Heizeinheiten 52a. Die Heizeinheiten 52a könnten beispielsweise in Form einer Matrix angeordnet sein. Im Folgenden wird insbesondere lediglich eine der Heizeinheiten 52a beschrieben.

Die Heizeinheit 52a ist in einer Einbaulage insbesondere unterhalb der Aufstellplatte 50a angeordnet. Die Heizeinheit 52a ist insbesondere dazu vorgesehen, zumindest ein auf der Aufstellplatte 50a oberhalb der Heizeinheit 52a aufgestelltes Gargeschirr 12a zu erhitzen. Die Heizeinheit 52a ist insbesondere als Induktionsheizeinheit ausgebildet. Die Heizeinheit 52a ist insbesondere Teil des Gargeräts 32a. Das Gargerät 32a insbesondere weist die Heizeinheit 52a auf.

Das Garsystem 10a weist insbesondere zumindest eine und vorteilhaft genau eine Geräte-Bedienerschnittstelle 54a auf. Die Geräte-Bedienerschnittstelle 54a des Gargeräts 32a ist insbesondere zu einer Eingabe und/oder Auswahl von Betriebsparametern vorgesehen, wie beispielsweise einer Heizleistung und/oder einer Heizleistungsdichte und/oder einer Heizzone. Die Geräte-Bedienerschnittstelle 54a des Gargeräts 32a ist insbesondere zu einer Ausgabe eines Werts eines Betriebsparameters an einen Bediener vorgesehen.

Das Garsystem 10a weist insbesondere zumindest eine und vorteilhaft genau eine Geräte-Steuereinheit 56a auf (vgl. Figur 1). In wenigstens einem Betriebszustand steuert und/oder regelt die Geräte-Steuereinheit 56a insbesondere eine Gargerätehauptfunktion. Die Geräte-Steuereinheit 56a ist insbesondere dazu vorgesehen, in Abhängigkeit von mittels der Geräte-Bedienerschnittstelle 54a eingegebener Betriebsparameter, Aktionen auszuführen und/oder Einstellungen zu verändern. Die Geräte-Steuereinheit 56a regelt in dem Betriebszustand insbesondere eine Energiezufuhr zu der Heizeinheit 52a.

Die Geräte-Steuereinheit 56a ist insbesondere wenigstens teilweise, vorteilhaft wenigstens zu einem Großteil und vorzugsweise vollständig Teil des Gargeräts 32a. Das Gargerät 32a weist insbesondere wenigstens teilweise, vorteilhaft wenigstens zu einem Großteil und vorzugsweise vollständig die Geräte-Steuereinheit 56a auf.

Das Garsystem 10a weist insbesondere zumindest eine Induktionseinheit 30a auf. Im vorliegenden Ausführungsbeispiel weist das Garsystem 10a insbesondere eine Vielzahl an Induktionseinheiten 30a auf.

Alternativ könnte das Garsystem 10a beispielsweise eine kleinere Anzahl an Induktionseinheiten 30a aufweisen, wie beispielsweise genau eine Induktionseinheit 30a und/oder zumindest zwei, insbesondere zumindest vier, vorteilhaft zumindest acht, besonders vorteilhaft zumindest zwölf und vorzugsweise mehrere Induktionseinheiten 30a. Die Induktionseinheiten 30a könnten beispielsweise in Form einer Matrix angeordnet sein. Im Folgenden wird insbesondere lediglich eine der Induktionseinheiten 30a beschrieben.

Die Induktionseinheit 30a ist insbesondere wenigstens teilweise einstückig mit der Heizeinheit 52a ausgebildet. Darunter, dass zwei Einheiten "teilweise einstückig" ausgebildet sind, soll insbesondere verstanden werden, dass die Einheiten zumindest ein, insbesondere zumindest zwei, vorteilhaft zumindest drei gemeinsame Elemente aufweisen, die Bestandteil, insbesondere funktionell wichtiger Bestandteil, beider Einheiten sind. Insbesondere ist eine Anzahl an Heizeinheiten 52a und eine Anzahl an Induktionseinheiten 30a wenigstens im Wesentlichen und vorteilhaft genau gleich.

In dem Betriebszustand beheizt die Heizeinheit 52a insbesondere das Gargeschirr 12a, und zwar insbesondere induktiv. Das Gargeschirr 12a definiert insbesondere zumindest einen und insbesondere genau einen Lebensmittelaufnahmeraum 14a wenigstens teilweise.

Das Garsystem 10a weist insbesondere zumindest einen und vorteilhaft genau einen Gargeschirrdeckel 58a auf (vgl. Figuren 1 und 2). Insbesondere ist der Gargeschirrdeckel 58a dem Gargeschirr 12a zugeordnet und/oder insbesondere für das Gargeschirr 12a vorgesehen.

Insbesondere definiert das Gargeschirr 12a in dem Betriebszustand, in welchem insbesondere der Gargeschirrdeckel 58a an dem Gargeschirr 12a angeordnet ist, den Lebensmittelaufnahmeraum 14a gemeinsam mit dem Gargeschirrdeckel 58a wenigstens im Wesentlichen und vorteilhaft vollständig.

Das Gargeschirr 12a weist insbesondere zumindest einen und vorteilhaft genau einen Gargeschirrboden 20a auf (vgl. Figur 2). Insbesondere begrenzt der Gargeschirrboden 20a den Lebensmittelaufnahmeraum 14a in einer Aufstelllage des Gargeschirrs 12a nach unten hin und/oder in einer der Induktionseinheit 30a des Gargeräts 32a zugewandten Richtung.

Das Gargeschirr 12a weist insbesondere zumindest eine und vorteilhaft genau eine Seitenwandung 36a auf (vgl. Figur 2). Insbesondere begrenzt die Seitenwandung 36a des Gargeschirrs 12a den Lebensmittelaufnahmeraum 14a in einer Aufstelllage des Gargeschirrs 12a in Richtungen, welche insbesondere wenigstens im Wesentlichen parallel zu einer Haupterstreckungsebene des Gargeschirrbodens 20a ausgerichtet sind. Die Seitenwandung 36a des Gargeschirrs 12a weist insbesondere eine zylindermantelartige Gestalt auf.

Das Gargeschirr 12a ist insbesondere einstückig ausgebildet. Insbesondere sind der Gargeschirrboden 20a und die Seitenwandung 36a des Gargeschirrs 12a einstückig miteinander verbunden. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling.

Das Garsystem 10a weist insbesondere zumindest eine und vorteilhaft genau eine Sensoreinheit 16a auf (vgl. Figuren 1 bis 5). Die Sensoreinheit 16a ist insbesondere zu einer Detektion zumindest einer Garkenngröße vorgesehen. Die Garkenngröße ist insbesondere als eine Temperatur ausgebildet, und zwar insbesondere als eine Temperatur des Gargeschirrs 12a, insbesondere des Gargeschirrbodens 20a und/oder der Seitenwandung 36a des Gargeschirrs 12a, und/oder als eine Temperatur zumindest eines sich in dem Lebensmittelaufnahmeraum 14a befindlichen Lebensmittels.

In dem Betriebszustand ist die Sensoreinheit 16a teilweise auf einer dem Lebensmittelaufnahmeraum 14a abgewandten Seite 18a des Gargeschirrbodens 20a des Gargeschirrs 12a an dem Gargeschirr 12a befestigt. Insbesondere ist die Sensoreinheit 16a in einer Aufstelllage, insbesondere des Gargeschirrs 12a auf der Aufstellplatte 50a, unterhalb des Gargeschirrs 12a, insbesondere unterhalb des Gargeschirrbodens 20a des Gargeschirrs 12a, angeordnet. In einer Aufstelllage ist die Sensoreinheit 16a insbesondere zwischen dem Gargeschirr 12a und der Aufstellplatte 50a, insbesondere zwischen dem Gargeschirrboden 20a des Gargeschirrs 12a und der Aufstellplatte 50a, angeordnet.

Im vorliegenden Ausführungsbeispiel ist die Sensoreinheit 16a in dem Betriebszustand teilweise auf einer dem Lebensmittelaufnahmeraum 14a abgewandten Seite 34a der Seitenwandung 36a des Gargeschirrs 12a an dem Gargeschirr 12a befestigt. Die Sensoreinheit 16a erstreckt sich insbesondere teilweise über zwei Wandungen des Gargeschirrs 12a, und zwar insbesondere über den Gargeschirrboden 20a und insbesondere die Seitenwandung 36a des Gargeschirrs 12a.

Insbesondere ist die Sensoreinheit 16a in dem Betriebszustand mittels zumindest einer Klebeverbindung an dem Gargeschirr 12a befestigt, und zwar insbesondere an dem Gargeschirrboden 20a und/oder der Seitenwandung 36a des Gargeschirrs 12a. Die Sensoreinheit 16a ist in dem Betriebszustand insbesondere stoffschlüssig an dem Gargeschirr 12a, insbesondere an dem Gargeschirrboden 20a und/oder der Seitenwandung 36a des Gargeschirrs 12a, befestigt.

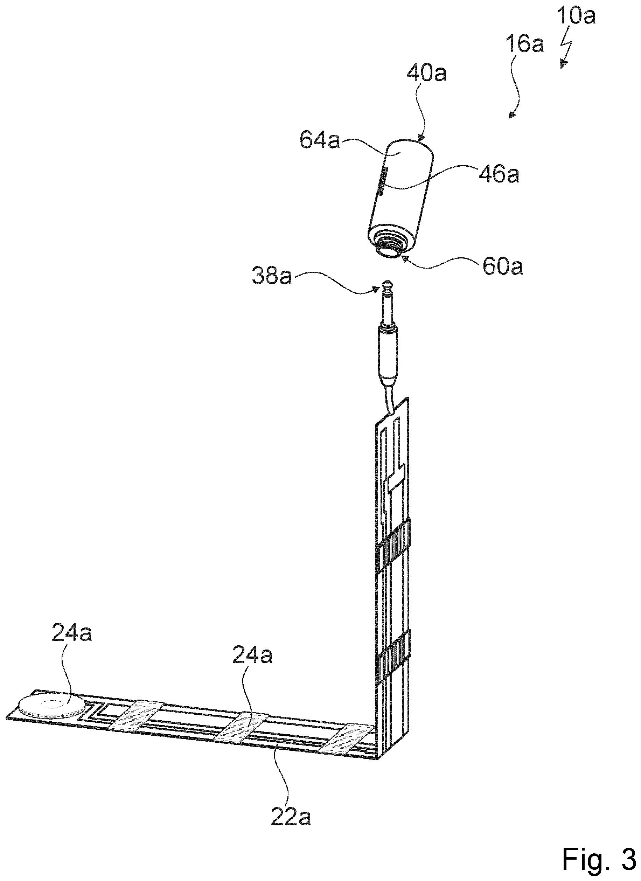

Die Sensoreinheit 16a weist insbesondere zumindest einen und vorteilhaft genau einen Grundkörper 22a auf (vgl. Figuren 2 und 3). Im vorliegenden Ausführungsbeispiel ist der Grundkörper 22a insbesondere streifenartig ausgebildet und weist insbesondere eine streifenartige Gestalt auf. Der Grundkörper 22a ist insbesondere folienartig und/oder als Folie ausgebildet. Insbesondere ist der Grundkörper 22a als eine selbstklebende Folie ausgebildet.

In dem Betriebszustand detektiert die Sensoreinheit 16a insbesondere zumindest eine Garkenngröße, insbesondere zumindest die Garkenngröße. Insbesondere weist die Sensoreinheit 16a, insbesondere zu einer Detektion der Garkenngröße, zumindest einen Detektor 24a auf (vgl. Figuren 2 und 3). Im vorliegenden Ausführungsbeispiel weist die Sensoreinheit 16a insbesondere fünf Detektoren 24a auf.

Insbesondere sind in dem Betriebszustand drei der Detektoren 24a auf der dem Lebensmittelaufnahmeraum 14a abgewandten Seite 18a des Gargeschirrbodens 20a des Gargeschirrs 12a an dem Gargeschirr 12a befestigt. In dem Betriebszustand sind insbesondere zwei der Detektoren 24a auf der dem Lebensmittelaufnahmeraum 14a abgewandten Seite 34a der Seitenwandung 36a des Gargeschirrs 12a an dem Gargeschirr 12a befestigt. Im Folgenden wird insbesondere lediglich einer der Detektoren 24a beschrieben.

Im vorliegenden Ausführungsbeispiel ist der Detektor 24a insbesondere an dem Grundkörper 22a angeordnet sein. Der Detektor 24a ist insbesondere folienartig und/oder als eine Folie ausgebildet. Insbesondere alternativ oder zusätzlich könnte der Detektor 24a insbesondere auf den Grundkörper 22a aufgedruckt und/oder mittels Beschichtung aufgebracht und/oder mittels Lackierung aufgebracht sein.

In einem alternativen Ausführungsbeispiel könnte der Detektor 24a beispielsweise in dem Grundkörper 22a angeordnet. Beispielsweise könnte der Detektor 24a in den Grundkörper 22a eingebracht, wie beispielsweise eingeätzt, sein.

Der insbesondere streifenförmige Grundkörper 22a erstreckt sich in dem Betriebszustand bei einer senkrechten Betrachtung auf eine Haupterstreckungsebene des Gargeschirrbodens 20a insbesondere über einen Anteil von wenigstens im Wesentlichen 70 % einer maximalen Erstreckung 26a des Gargeschirrbodens 20a. Insbesondere erstreckt sich die Sensoreinheit 16a in dem Betriebszustand bei einer senkrechten Betrachtung auf eine Haupterstreckungsebene des Gargeschirrbodens 20a über einen Anteil von wenigstens im Wesentlichen 70 % einer maximalen Erstreckung 26a des Gargeschirrbodens 20a.

Unter "wenigstens im Wesentlichen" soll in diesem Zusammenhang insbesondere verstanden werden, dass eine Abweichung von einem vorgegebenen Wert insbesondere maximal 25 %, vorzugsweise maximal 10 % und besonders bevorzugt maximal 5 % des vorgegebenen Werts abweicht.

Die Sensoreinheit 16a weist insbesondere zumindest ein und vorteilhaft genau eine Induktionseinheit 28 auf (vgl. Figuren 2 und 3). Insbesondere ist die Induktionseinheit 28a der Sensoreinheit 16a in dem Betriebszustand an und/oder in dem Grundkörper 22a angeordnet. Im vorliegenden Ausführungsbeispiel ist die Induktionseinheit 28a der Sensoreinheit 16a insbesondere an dem Grundkörper 22a angeordnet. Insbesondere weist die Induktionseinheit 28a der Sensoreinheit 16a zumindest eine Spule auf und ist insbesondere als Spule ausgebildet.

In einer Aufstelllage ist die Induktionseinheit 28a der Sensoreinheit 16a insbesondere auf der dem Lebensmittelaufnahmeraum 14a abgewandten Seite 18a des Gargeschirrbodens 20a des Gargeschirrs 12a angeordnet.

In dem Betriebszustand nimmt die Induktionseinheit 28a der Sensoreinheit 16a insbesondere Energie, insbesondere induktiv, von der Induktionseinheit 30a des Gargeräts 32a auf. Insbesondere ist die Induktionseinheit 28a der Sensoreinheit 16a zu einer induktiven Energieaufnahme von der Induktionseinheit 30a des Gargeräts 32a vorgesehen.

Die Induktionseinheit 28a der Sensoreinheit 16a ist insbesondere in einem Endbereich des Grundkörpers 22a angeordnet, welcher insbesondere dem Teil der Sensoreinheit 16a, welcher an der Seitenwandung 36a des Gargeschirrs 12a befestigt ist, in dem Betriebszustand abgewandt ist. In dem Betriebszustand ist die Induktionseinheit 28a der Sensoreinheit 16a insbesondere in einem Endbereich des Grundkörpers 22a angeordnet, welcher insbesondere an einem einer elektrischen Koppelstelle 38a der Sensoreinheit 16a entgegengesetzten Ende des Grundkörpers 22a angeordnet ist.

Die Sensoreinheit 16a weist insbesondere zumindest eine und vorteilhaft genau eine, insbesondere zumindest die und vorteilhaft genau die, elektrische Koppelstelle 38a auf (vgl. insbesondere Figur 3). Die elektrische Koppelstelle 38a ist insbesondere an dem Grundkörper 22a befestigt und/oder mit dem Grundkörper 22a, insbesondere elektrisch und/oder mechanisch, verbunden. Insbesondere ist die elektrische Koppelstelle 38a zu einer, insbesondere elektrischen und/oder mechanischen, Kopplung des Grundkörpers 22a mit zumindest einer Elektronikeinheit 40a der Sensoreinheit 16a vorgesehen.

Die Sensoreinheit 16a weist insbesondere zumindest eine und vorteilhaft genau eine, insbesondere zumindest die und vorteilhaft genau die, Elektronikeinheit 40a auf (vgl. Figuren 2 bis 5). Insbesondere weist die Elektronikeinheit 40a zumindest eine Koppelstelle 60a auf, welche insbesondere eine zu der elektrischen Koppelstelle 38a, welche insbesondere zumindest an dem Grundkörper 22a angeordnet ist, korrespondierende Formgebung und/oder Gestalt aufweist, Im vorliegenden Ausführungsbeispiel weist die Koppelstelle 38a, welche insbesondere zumindest an dem Grundkörper 22a angeordnet ist, insbesondere zumindest einen männlichen Stecker und die Koppelstelle 60a der Elektronikeinheit 40a insbesondere zumindest einen weiblichen Stecker auf.

Die Elektronikeinheit 40a ist insbesondere zu einer lösbaren Verbindung mit der Koppelstelle 38a, welche insbesondere zumindest an dem Grundkörper 22a angeordnet ist, vorgesehen. In dem Betriebszustand sind die Elektronikeinheit 40a und die Koppelstelle 38a, welche insbesondere zumindest an dem Grundkörper 22a angeordnet ist, insbesondere lösbar, vorteilhaft werkzeuglos lösbar, miteinander verbunden. Insbesondere sind die Elektronikeinheit 40a und die Koppelstelle 38a, welche insbesondere zumindest an dem Grundkörper 22a angeordnet ist, in dem Betriebszustand mittels zumindest einer Steckverbindung miteinander verbunden.

Im vorliegenden Ausführungsbeispiel weist die Sensoreinheit 16a insbesondere zumindest eine und vorteilhaft genau eine Halteeinheit 42a auf (vgl. Figur 2). Die Halteeinheit 42a ist in dem Betriebszustand insbesondere an der Seitenwandung 36a des Gargeschirrs 12a befestigt, an welcher insbesondere die Sensoreinheit 16a teilweise befestigt ist. Insbesondere ist die Halteeinheit 42a zu einer Befestigung an der Seitenwandung 36a des Gargeschirrs 12a vorgesehen.

In dem Betriebszustand hält die Halteeinheit 42a insbesondere die Elektronikeinheit 40a. Insbesondere ist die Halteeinheit 42a zu einer Halterung der Elektronikeinheit 40a vorgesehen. Die Halteeinheit 42a weist insbesondere zumindest einen und vorteilhaft genau einen Aufnahmebereich 62a auf. In dem Betriebszustand umgreift die Halteeinheit 42a die Elektronikeinheit 40a insbesondere wenigstens teilweise, vorteilhaft teilweise. Insbesondere hält die Halteeinheit 42a die Elektronikeinheit 40a in dem Betriebszustand mittels zumindest einer formschlüssigen und/oder kraftschlüssigen Verbindung.

Die Halteeinheit 42a und die Elektronikeinheit 40a sind im vorliegenden Ausführungsbeispiel insbesondere miteinander verrastet und/oder mittels zumindest einer Rastverbindung miteinander verbunden. Insbesondere ist die Elektronikeinheit 40a in dem Betriebszustand wenigstens teilweise in der Halteeinheit 42a, insbesondere in dem Aufnahmebereich 62a der Halteeinheit 42a, angeordnet.

Die Elektronikeinheit 40a weist insbesondere eine Elektronikgehäuseeinheit 64a auf. Insbesondere weist die Elektronikgehäuseeinheit 64a eine zylinderförmige Gestalt auf und/oder ist insbesondere zylinderförmig ausgebildet.

In einer Aufstelllage umgibt die Halteeinheit 42a die Elektronikeinheit 40a insbesondere in zumindest einer Ebene, vorteilhaft in mehreren Ebenen, welche insbesondere parallel zu einer Haupterstreckungsebene der Aufstellplatte 50a ausgerichtet ist/sind, um einen Winkelbereich von mindestens 45 °, insbesondere von mindestens 60 °, vorteilhaft von mindestens 90°, besonders vorteilhaft von mindestens 120 °, vorzugsweise von mindestens 150 ° und besonders bevorzugt von mindestens 180 °. Insbesondere umgibt die Halteeinheit 42a die Elektronikeinheit 40a in einer Aufstelllage in zumindest einer Ebene, vorteilhaft in mehreren Ebenen, welche insbesondere parallel zu einer Haupterstreckungsebene der Aufstellplatte 50a ausgerichtet ist/sind, um einen Winkelbereich von maximal 350 °, insbesondere von maximal 330 °, vorteilhaft von maximal 300 °, besonders vorteilhaft von maximal 270 °, vorzugsweise von maximal 240 ° und besonders bevorzugt von maximal 200 °.

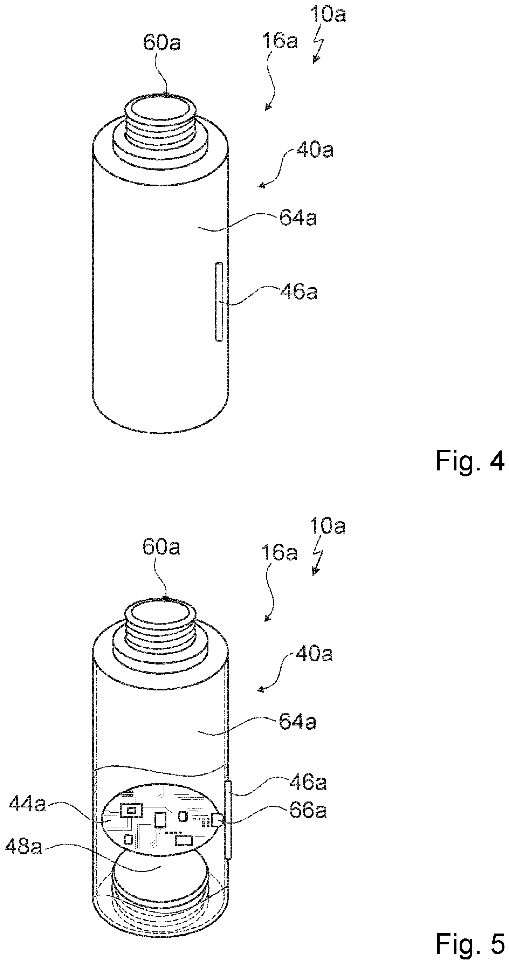

Die Elektronikeinheit 40a weist insbesondere zumindest eine und vorteilhaft genau eine Steuereinheit 44a auf (vgl. Figur 5). In dem Betriebszustand ist die Steuereinheit 44a insbesondere wenigstens teilweise, vorteilhaft wenigstens zu einem Großteil und vorzugsweise vollständig innerhalb der Elektronikgehäuseeinheit 64a angeordnet. Die Steuereinheit 44a ist insbesondere zumindest zu einer Verarbeitung der Garkenngröße vorgesehen. In dem Betriebszustand verarbeitet die Steuereinheit 44a insbesondere die Garkenngröße. Insbesondere übermittelt die Steuereinheit 44a in dem Betriebszustand die Garkenngröße an die Geräte-Steuereinheit 56a.

Die Elektronikeinheit 40a weist insbesondere zumindest eine und vorteilhaft genau eine Ausgabeeinheit 46a auf (vgl. Figuren 4 und 5). In dem Betriebszustand ist die Ausgabeeinheit 46a insbesondere wenigstens teilweise vorteilhaft wenigstens zu einem Großteil und vorzugsweise vollständig zumindest in der Elektronikgehäuseeinheit 64a integriert, und zwar insbesondere entweder von der Elektronikgehäuseeinheit 64a umgeben und/oder in einer Wandung der Elektronikgehäuseeinheit 64a integriert.

Die Ausgabeeinheit 46a ist insbesondere zu einer Ausgabe zumindest einer Information vorgesehen. In dem Betriebszustand gibt die Ausgabeeinheit 46a insbesondere zumindest eine Information, insbesondere an einen Bediener, aus. Insbesondere weist die Ausgabeeinheit 46a zumindest ein Leuchtelement 66a auf, welches insbesondere als eine LED ausgebildet ist. Die Ausgabeeinheit 46a ist insbesondere wenigstens teilweise einstückig mit der Steuereinheit 44a ausgebildet. Insbesondere ist das Leuchtelement 66a der Ausgabeeinheit 46a an der Steuereinheit 44a angeordnet.

Die Elektronikeinheit 40a weist insbesondere zumindest einen und vorteilhaft genau einen Akkumulator 48a auf (vgl. Figur 5). In dem Betriebszustand ist der Akkumulator 48a insbesondere wenigstens teilweise, vorteilhaft wenigstens zu einem Großteil und vorzugsweise vollständig innerhalb der Elektronikgehäuseeinheit 64a angeordnet. Der Akkumulator 48a ist in dem Betriebszustand insbesondere zu einer Energieversorgung durch die Induktionseinheit 28a der Sensoreinheit 16a vorgesehen. In dem Betriebszustand empfängt der Akkumulator 48a insbesondere Energie von der Induktionseinheit 28a der Sensoreinheit 16a und speichert insbesondere überschüssige empfangene Energie.

Die Sensoreinheit 16a ist insbesondere als Nachrüstbausatz ausgebildet. Insbesondere ist die Sensoreinheit 16a zu einer Anbringung und/oder Befestigung an beliebigen Gargeschirren 12a vorgesehen.

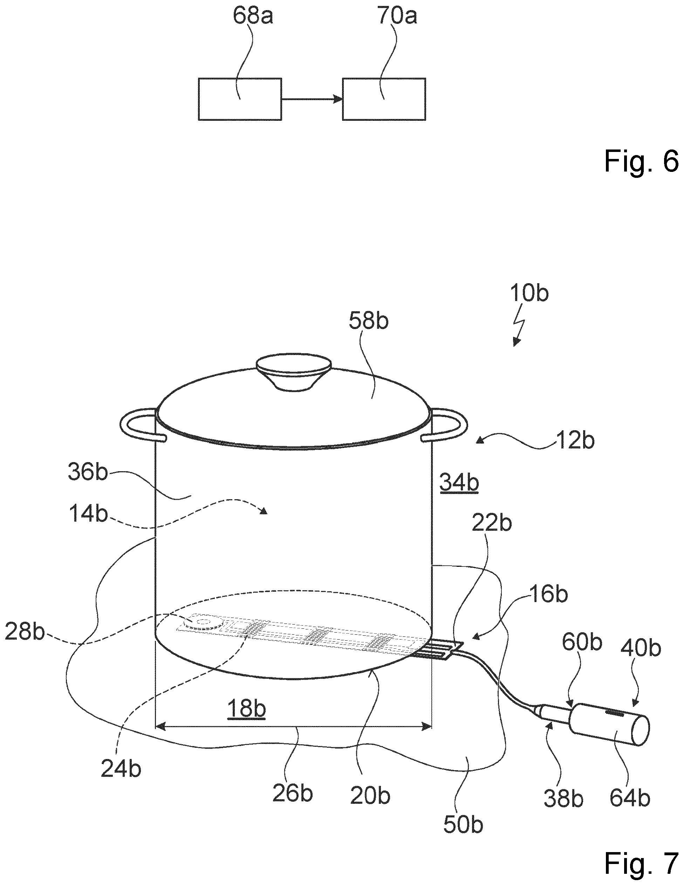

In einem Verfahren zu einem Betrieb des Garsystems 10a wird die Sensoreinheit 16a, insbesondere durch einen Bediener und/oder durch einen Monteur, an dem Gargeschirr 12a befestigt. Insbesondere werden die Sensoreinheit 16a und das Gargeschirr 12a, insbesondere in einem Annährungsschritt 68a, einander angenähert. Beispielsweise könnte die Sensoreinheit 16a dem Gargeschirr 12a und/oder das Gargeschirr 12a der Sensoreinheit 16a, insbesondere in dem Annährungsschritt 68a, angenähert werden (vgl. Figur 6).

Insbesondere wird die Sensoreinheit 16a, insbesondere in einem Befestigungsschritt 70a, wenigstens teilweise auf einer dem Lebensmittelaufnahmeraum 14a, welcher durch das Gargeschirr 12a wenigstens teilweise definiert ist, abgewandten Seite 18a des Gargeschirrbodens 20a des Gargeschirrs 12a an dem Gargeschirr 12a befestigt. Insbesondere wird die Sensoreinheit 16a, insbesondere in dem Befestigungsschritt 70a, im vorliegenden Ausführungsbeispiel, insbesondere zusätzlich, wenigstens teilweise auf einer dem Lebensmittelaufnahmeraum 14a abgewandten Seite 34a der Seitenwandung 36a des Gargeschirrs 12a an dem Gargeschirr 12a befestigt.

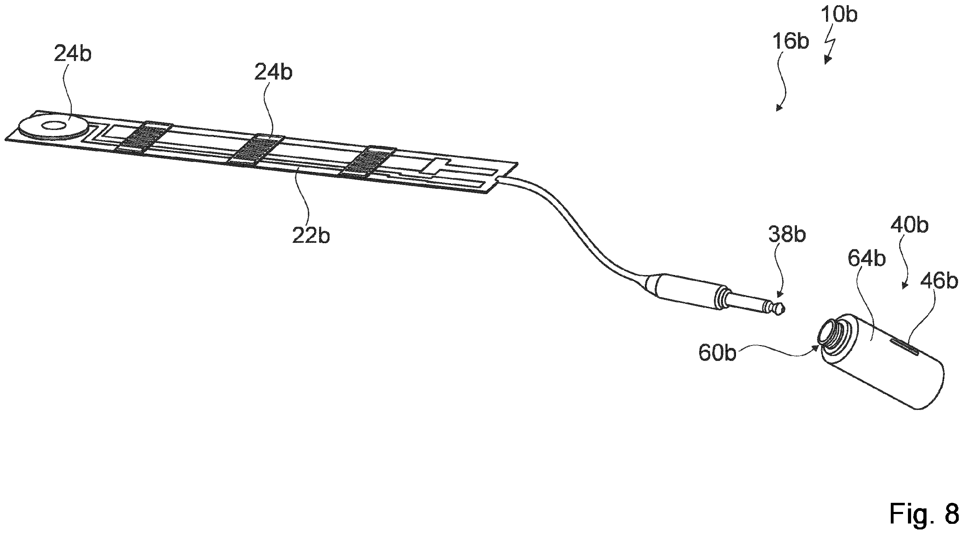

In Figuren 7 und 8 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Figuren 1 bis 6 verwiesen werden kann. Zur Unterscheidung der Ausführungsbeispiele ist der Buchstabe a in den Bezugszeichen des Ausführungsbeispiels in den Figuren 1 bis 6 durch den Buchstaben b in den Bezugszeichen des Ausführungsbeispiels der Figuren 7 und 8 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figuren 1 bis 6 verwiesen werden.

Figuren 7 und 8 zeigen ein alternatives Garsystem 10b, welches ein Gargeschirr 12a und eine an dem Gargeschirr 12b befestigte Sensoreinheit 16b aufweist. Im vorliegenden Ausführungsbeispiel ist die Sensoreinheit 16b in wenigstens einem Betriebszustand wenigstens teilweise und vorteilhaft wenigstens zu einem Großteil auf einer einem Lebensmittelaufnahmeraum 14b abgewandten Seite 18b eines Gargeschirrbodens 20b des Gargeschirrs 12b an dem Gargeschirr 12b befestigt. Insbesondere ist eine Seitenwandung 36b des Gargeschirrs 12b frei von der Sensoreinheit 16b.

Insbesondere weist die Sensoreinheit 16b eine Elektronikeinheit 40b auf. Die Elektronikeinheit 40b ist insbesondere zu einem Auflegen, insbesondere auf einer Aufstellplatte 50b, vorgesehen. In dem Betriebszustand ist die Elektronikeinheit 40b insbesondere auf der Aufstellplatte 50b aufgelegt und/oder platziert.

### Bezugszeichen

- 10: Garsystem
- 12: Gargeschirr
- 14: Lebensmittelaufnahmeraum
- 16: Sensoreinheit
- 18: Seite
- 20: Gargeschirrboden
- 22: Grundkörper
- 24: Detektor
- 26: Erstreckung
- 28: Induktionseinheit
- 30: Induktionseinheit
- 32: Gargerät
- 34: Seite
- 36: Seitenwandung
- 38: Koppelstelle
- 40: Elektronikeinheit
- 42: Halteeinheit
- 44: Steuereinheit
- 46: Ausgabeeinheit
- 48: Akkumulator
- 50: Aufstellplatte
- 52: Heizeinheit
- 54: Geräte-Bedienerschnittstelle
- 56: Geräte-Steuereinheit
- 58: Gargeschirrdeckel
- 60: Koppelstelle
- 62: Aufnahmebereich
- 64: Elektronikgehäuseeinheit
- 66: Leuchtelement
- 68: Annährungsschritt
- 70: Befestigungsschritt

## Patentansprüche

1. Garsystem, insbesondere Induktionsgarsystem, mit zumindest einem Gargeschirr (12a-b), welches zumindest einen Lebensmittelaufnahmeraum (14a-b) wenigstens teilweise definiert, und mit zumindest einer Sensoreinheit (16a-b), welche zu einer Detektion zumindest einer Garkenngröße vorgesehen ist, wobei die Sensoreinheit (16a-b) in wenigstens einem Betriebszustand wenigstens teilweise auf einer dem Lebensmittelaufnahmeraum (14a-b) abgewandten Seite (18a-b) eines Gargeschirrbodens (20a-b) des Gargeschirrs (12a-b) an dem Gargeschirr (12a-b) befestigt ist, **dadurch gekennzeichnet, dass** die Sensoreinheit (16a-b) zumindest eine elektrische Koppelstelle (38a-b) und zumindest eine Elektronikeinheit (40a-b) aufweist, welche zu einer lösbaren Verbindung mit der Koppelstelle (38a-b) der Sensoreinheit (16a-b) vorgesehen ist.

2. Garsystem nach Anspruch 1, **dadurch gekennzeichnet, dass** die Sensoreinheit (16a-b) mittels zumindest einer Klebeverbindung an dem Gargeschirr (12a-b) befestigt ist.

3. Garsystem nach Anspruch 1 oder 2, **dadurch gekennzeichnet, dass** die Sensoreinheit (16a-b) zumindest einen streifenartigen Grundkörper (22a-b) und zumindest einen Detektor (24a-b) aufweist, welcher an und/oder in dem Grundkörper (22a-b) angeordnet ist.

4. Garsystem nach einem der vorhergehenden Ansprüche, **dadurch gekennzeichnet, dass** sich die Sensoreinheit (16a-b) in dem Betriebszustand bei einer senkrechten Betrachtung auf eine Haupterstreckungsebene des Gargeschirrbodens (20a-b) über einen Anteil von mindestens 20 % einer maximalen Erstreckung (26a-b) des Gargeschirrbodens (20a-b) erstreckt.

5. Garsystem nach einem der vorhergehenden Ansprüche, **dadurch gekennzeichnet, dass** die Sensoreinheit (16a-b) zumindest eine Induktionseinheit (28a-b) aufweist, welche zu einer induktiven Energieaufnahme von zumindest einer Induktionseinheit (30a-b) zumindest eines Gargeräts (32a-b) vorgesehen ist.

6. Garsystem nach einem der vorhergehenden Ansprüche, **dadurch gekennzeichnet, dass** die Sensoreinheit (16a) in dem Betriebszustand wenigstens teilweise auf einer dem Lebensmittelaufnahmeraum (14a) abgewandten Seite (34a) einer Seitenwandung (36a) des Gargeschirrs (12a) an dem Gargeschirr (12a) befestigt ist.

7. Garsystem nach einem der vorhergehenden Ansprüche, **dadurch gekennzeichnet, dass** die Sensoreinheit (16a) zumindest eine Halteeinheit (42a) aufweist, welche zu einer Befestigung an zumindest einer Seitenwandung (36a) des Gargeschirrs (12a) und zu einer Halterung der Elektronikeinheit (40a) vorgesehen ist.

8. Garsystem nach einem der vorhergehenden Ansprüche, **dadurch gekennzeichnet, dass** die Elektronikeinheit (40a-b) zumindest eine Steuereinheit (44a-b) aufweist, welche zumindest zu einer Verarbeitung der Garkenngröße vorgesehen ist.

9. Garsystem nach einem der vorhergehenden Ansprüche, **dadurch gekennzeichnet, dass** die Elektronikeinheit (40a-b) zumindest eine Ausgabeeinheit (46a-b) aufweist, welche zu einer Ausgabe zumindest einer Information vorgesehen ist.

10. Garsystem nach einem der vorhergehenden Ansprüche, **dadurch gekennzeichnet, dass** die Elektronikeinheit (40a-b) zumindest einen Akkumulator (48a-b) aufweist.

11. Garsystem nach einem der vorhergehenden Ansprüche, **dadurch gekennzeichnet, dass** die Sensoreinheit (16a-b) als Nachrüstbausatz ausgebildet ist.

12. Verfahren zu einem Betrieb eines Garsystems (10a-b), insbesondere nach einem der vorhergehenden Ansprüche, wobei zumindest eine Sensoreinheit (16a-b) wenigstens teilweise auf einer zumindest einem Lebensmittelaufnahmeraum (14ab), welcher durch zumindest ein Gargeschirr (12a-b) wenigstens teilweise definiert ist, abgewandten Seite (18a-b) eines Gargeschirrbodens (20a-b) des Gargeschirrs (12a-b) an dem Gargeschirr (12a-b) befestigt wird, **dadurch gekennzeichnet, dass** die Sensoreinheit (16a-b) zumindest eine elektrische Koppelstelle (38a-b) und zumindest eine Elektronikeinheit (40a-b) aufweist, welche lösbar mit der Koppelstelle (38a-b) der Sensoreinheit (16a-b) verbunden wird.

## Claims

1. Cooking system, in particular induction cooking system, with at least one item of cookware (12a-b), which at least partially defines at least one food receiving space (14a-b), and with at least one sensor unit (16a-b), which is provided for detection of at least one cooking characteristic variable, wherein the sensor unit (16a-b) in at least one operating state is fastened at least partially to the cookware (12a-b) on a side (18a-b), which faces away from the food receiving space (14a-b), of a cookware base (20a-b) of the cookware (12a-b), **characterised in that** the sensor unit (16a-b) has at least one electrical coupling point (38a-b) and at least one electronics unit (40a-b), which is provided for detachable connection to the coupling point (38a-b) of the sensor unit (16a-b).

2. Cooking system according to claim 1, **characterised in that** the sensor unit (16a-b) is fastened to the cookware (12a-b) by means of at least one adhesive connection.

3. Cooking system according to claim 1 or 2, **characterised in that** the sensor unit (16a-b) has at least one strip-like base body (22a-b) and at least one detector (24a-b), which is arranged on and/or in the base body (22a-b).

4. Cooking system according to one of the preceding claims, **characterised in that** the sensor unit (16a-b) in the operating state, when viewed perpendicularly to a main extension plane of the cookware base (20a-b), extends over a portion of at least 20 % of a maximum extension (26a-b) of the cookware base (20a-b).

5. Cooking system according to one of the preceding claims, **characterised in that** the sensor unit (16a-b) has at least one induction unit (28a-b), which is provided for inductively receiving energy from at least one induction unit (30a-b) of at least one cooking appliance (32a-b).

6. Cooking system according to one of the preceding claims, **characterised in that** the sensor unit (16a) in the operating state is fastened at least partially to the cookware (12a) on a side (34a), which faces away from the food receiving space (14a), of a side wall (36a) of the cookware (12a).

7. Cooking system according to one of the preceding claims, **characterised in that** the sensor unit (16a) has at least one holding unit (42a), which is provided for fastening to at least one side wall (36a) of the cookware (12a) and for holding the electronics unit (40a).

8. Cooking system according to one of the preceding claims, **characterised in that** the electronics unit (40a-b) has at least one control unit (44a-b), which is provided at least for processing the cooking characteristic variable.

9. Cooking system according to one of the preceding claims, **characterised in that** the electronics unit (40a-b) has at least one output unit (46a-b), which is provided for outputting at least one item of information.

10. Cooking system according to one of the preceding claims, **characterised in that** the electronics unit (40a-b) has at least one accumulator (48a-b)

11. Cooking system according to one of the preceding claims, **characterised in that** the sensor unit (16a-b) is embodied as an add-on kit.

12. Method for operating a cooking system (10a-b), in particular according to one of the preceding claims, wherein at least one sensor unit (16a-b), is fastened at least partially to the cookware (12a-b) on a side (18a-b), which faces away from a food receiving space (14a-b) that is at least partially defined by at least one item of cookware (12a-b), of a cookware base (20a-b) of the cookware (12a-b), **characterised in that** the sensor unit (16a-b) has at least one electrical coupling point (38a-b) and at least one electronics unit (40a-b), which is detachably connected to the coupling point (38a-b) of the sensor unit (16a-b).

## Revendications

1. Système de cuisson, en particulier système de cuisson à induction, avec au moins un élément de batterie de cuisine (12a-b), lequel définit au moins partiellement au moins un espace d'accueil de denrées alimentaires (14a-b), et avec au moins une unité de capteurs (16a-b) prévue pour une détection d'au moins une grandeur caractéristique de cuisson, dans lequel l'unité de capteurs (16a-b) est fixée, dans au moins un état de fonctionnement, à l'élément de batterie de cuisine (12a-b) au moins partiellement sur un côté (18a-b) d'un fond d'élément de batterie de cuisine (20a-b) de l'élément de batterie de cuisine (12a-b) éloigné de l'espace d'accueil de denrées alimentaires (14a-b), **caractérisé en ce que** l'unité de capteurs (16a-b) présente au moins un point de couplage électrique (38a-b) et au moins une unité électronique (40a-b), prévue pour une liaison amovible avec le point de couplage (38a-b) de l'unité de capteurs (16a-b).

2. Système de cuisson selon la revendication 1, **caractérisé en ce que** l'unité de capteurs (16a-b) est fixée à l'élément de batterie de cuisine (12a-b) à l'aide d'au moins une liaison collée.

3. Système de cuisson selon la revendication 1 ou 2, **caractérisé en ce que** l'unité de capteurs (16a-b) présente au moins un corps de base en forme de bande (22a-b) et au moins un détecteur (24a-b) disposé sur et/ou dans le corps de base (22a-b).

4. Système de cuisson selon l'une des revendications précédentes, **caractérisé en ce que** l'unité de capteurs (16a-b) s'étend, dans l'état de fonctionnement, vu à la verticale par rapport à un plan d'extension principal du fond d'élément de batterie de cuisine (20a-b), sur une part d'au moins 20 % d'une extension maximale (26a-b) du fond d'élément de batterie de cuisine (20a-b).

5. Système de cuisson selon l'une des revendications précédentes, **caractérisé en ce que** l'unité de capteurs (16a-b) présente au moins une unité à induction (28a-b) prévue pour une absorption d'énergie inductive d'au moins une unité à induction (30a-b) d'au moins un appareil de cuisson (32a-b).

6. Système de cuisson selon l'une des revendications précédentes, **caractérisé en ce que** l'unité de capteurs (16a) est, dans l'état de fonctionnement, au moins partiellement fixée à l'élément de batterie de cuisine (12a) sur un côté (34a) d'une paroi latérale (36a) de l'élément de batterie de cuisine (12a) éloigné de l'espace d'accueil de denrées alimentaires (14a).

7. Système de cuisson selon l'une des revendications précédentes, **caractérisé en ce que** l'unité de capteurs (16a) présente au moins une unité de retenue (42a) prévue pour une fixation à au moins une paroi latérale (36a) de l'élément de batterie de cuisine (12a) et pour un maintien de l'unité électronique (40a).

8. Système de cuisson selon l'une des revendications précédentes, **caractérisé en ce que** l'unité électronique (40a-b) présente au moins une unité de commande (44a-b) prévue au moins pour un traitement de la grandeur caractéristique de cuisson.

9. Système de cuisson selon l'une des revendications précédentes, **caractérisé en ce que** l'unité électronique (40a-b) présente au moins une unité d'émission (46a-b) prévue au moins pour une émission d'au moins une information.

10. Système de cuisson selon l'une des revendications précédentes, **caractérisé en ce que** l'unité électronique (40a-b) présente au moins un accumulateur (48a-b).

11. Système de cuisson selon l'une des revendications précédentes, **caractérisé en ce que** l'unité de capteurs (16a-b) est formée sous la forme d'un kit complémentaire.

12. Procédé pour une exploitation d'un système de cuisson (10a-b), en particulier selon l'une des revendications précédentes, dans lequel au moins une unité de capteurs (16a-b) est au moins partiellement fixée à l'élément de batterie de cuisine (12a-b) sur un côté (18a-b) d'un fond d'élément de batterie de cuisine (20a-b) de l'élément de batterie de cuisine (12a-b) éloigné d'au moins un espace d'accueil de denrées alimentaires (14a-b) défini au moins partiellement par au moins un élément de batterie de cuisine (12a-b), **caractérisé en ce que** l'unité de capteurs (16a-b) présente au moins un point de couplage électrique (38a-b) et au moins une unité électronique (40a-b) reliée de façon amovible au point de couplage (38a-b) de l'unité de capteurs (16a-b).
